## Europäisches Patentamt

## European Patent Office

## Office européen des brevets

(11) Veröffentlichungsnummer: **0 087 672**
**B1**

(12) # EUROPÄISCHE PATENTSCHRIFT

(45) Veröffentlichungstag der Patentschrift:
13.01.88

(51) Int. Cl.⁴: **B 23 C 1/12, B 23 Q 1/12**

(21) Anmeldenummer: **83101438.6**

(22) Anmeldetag: **15.02.83**

(54) **Werkzeugmaschine mit schwenkbarem Spindelkopf.**

(30) Priorität: **19.02.82 DE 3206121**

(43) Veröffentlichungstag der Anmeldung:
**07.09.83 Patentblatt 83/36**

(45) Bekanntmachung des Hinweises auf die Patenterteilung:
**13.01.88 Patentblatt 88/2**

(84) Benannte Vertragsstaaten:
**AT CH FR GB IT LI**

(56) Entgegenhaltungen:
**DE-A-2 131 537**
**DE-A-2 433 541**
**DE-B-1 267 942**
**DE-C-303 777**
**DE-U-6 607 786**
**DE-U-7 300 930**
**US-A-3 452 642**

(73) Patentinhaber: **Friedrich Deckel Aktiengesellschaft, Plinganserstrasse 150, D-8000 München 70 (DE)**

(72) Erfinder: **Geiger, Michael, Ina- Seidel- Weg 8, D-8130 Starnberg (DE)**
Erfinder: **Finsterwalder, Bernd, Waldesruhe 19, D-8000 München 70 (DE)**
Erfinder: **Kagerer, Franz, Ludwig- Braille- Strasse 6, D-8000 München 70 (DE)**

LIBER, STOCKHOLM 1988

## Beschreibung

Die Erfindung betrifft eine Werkzeugmaschine der im Oberbegriff des Anspruches 1 genannten Art.

Durch Eindrücken des Betätigungsstiftes in das Ende der Arbeitsspindel wird die Spanneinrichtung gegen die Kraft der Spannfedern gelöst. Da die Spannfedern eine sichere Spannung der Werkzeuge auch bei hohen Bearbeitungskräften gewährleisten müssen, sind die beim Lösen der Werkzeuge zu überwindenden Federkräfte relativ groß. Ein weiteres konstruktives Problem besteht darin, daß der Betätigungsstift je nach Schwenklage des Spindelkopfes ebenfalls unterschiedliche Stellungen einnimmt, so daß die Mittel zum Betätigen dieses Betätigungsstiftes an diese technische Gegebenheit angepaßt sein müssen.

Die DE-A-2 433 541 zeigt bereits eine Werkzeugmaschine der im Oberbegriff des Anspruches 1 genannten Art. Dabei ist der Betätigungsstift mehr oder weniger während des gesamten Schwenkvorganges mit einer nockenscheibenartigen Exzenterscheibe in Kontakt, so daß die Spanneinrichtung während dieses Schwenkvorganges gelöst wird. Das heißt aber, daß das Werkzeug noch während des Schwenkens vollständig freigegeben wird. Bei den heute üblichen schnellen Schwenkbewegungen wirken auf die Werkzeuge erhebliche Zentrifugalkräfte. Bei schnellen Schwenkbewegungen besteht aber die Gefahr, daß das Werkzeug aus der Werkzeugaufnahme herausgeschleudert wird, was zum einen wegen der Zerstörung des Werkzeuges, zum anderen wegen der damit verbundenen Unfallgefahr nicht tragbar ist.

Es ist die Aufgabe der Erfindung, eine Werkzeugmaschine der gattungsgemäßen Art zu schaffen, bei der ein Herausschleudern des Werkzeuges während der Schwenkbewegung mit Sicherheit vermieden wird.

Diese Aufgabe ist durch die im Kennzeichen des Anspruches 1 enthaltenen Merkmale gelöst. Das Werkzeug wird nicht während und durch die Schwenkbewegung gelöst, sondern in einer eindeutigen Werkzeugwechselstellung, bei der der Spindelkopf sich nicht bewegt. In dieser Stellung wirken keine Kräfte, insbesondere keine Zentrifugalkräfte auf das Werkzeug, so daß ein Herausschleudern des Werkzeuges aus der Spindelaufnahme sicher vermieden wird. Die Stellung, bei der das Werkzeug gelöst wird, ist gleichzeitig die Werkzeugwechselstellung, bei der dieses Werkzeug aus der Spindelaufnahme entnommen und ein neues eingesetzt wird. Der Spindelkopf macht demnach dann, wenn das Werkzeug nicht mehr gespannt ist, keine Bewegungen mehr.

Die unterschiedlichen Schwenkstellungen einschließlich der Werkzeugwechselstellung können durch Anschläge genau festgelegt sein, so daß auch die Lage des Betätigungsstiftes zum Betätigungshebel der Betätigungseinrichtung genau definiert ist; zum Halten des Spindelkopfes in seinen Schwenkstellungen sind diesem gemäß einer Ausgestaltung der Erfindung Klemmeinrichtungen zugeordnet.

Die Verstellung des Spindelkopfes erfolgt gemäß einer weiteren Ausgestaltung der Erfindung durch einen am Spindelkopf angreifenden, sich gegen den Spindelkopfträger abstützenden Servoantrieb.

Der Betätigungsantrieb wirkt gemäß einer weiteren Ausgestaltung der Erfindung über einen schwenkbaren Kipphebel auf den Betätigunsstift der Spanneinrichtung.

Ein Ausführungsbeispiel der Erfindung ist in der Zeichnung dargestellt und im folgenden näher beschrieben. Es zeigen:

Fig. 1 schematisch eine Anordnung mit einem in zwei Arbeitsstellungen und eine dazwischen liegende Werkzeugwechselstellung schwenkbaren Spindelkopf in einer Seitenansicht;

Fig. 2 eine Anordnung etwa gemäß Fig. 1 in detaillierter Ausführung in Seitenansicht;

Fig. 3 eine Anordnung gemäß Fig. 2 in einem Schnitt entsprechend der Linie III-III in Fig. 2.

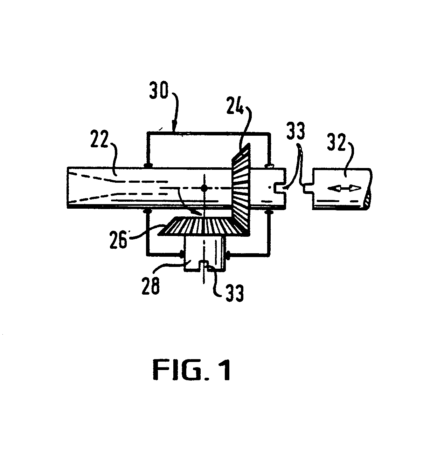

In Fig. 1 ist sehr schematisch der Spindelkopf 30 einer Werkzeugmaschine dargestellt, welcher z. B. an einem an der Maschine angeordneten Spindelkopfträger auf eine nicht näher bezeichnete Art und Weise um eine senkrecht zur Zeichenebene stehende Achse schwenkbar gelagert ist. Im Spindelkopf ist die Arbeitsspindel 22 drehbar gelagert. Eine im Spindelkopfträger gelagerte Antriebswelle 32 kann beispielsweise durch Längsverschieben mit der Spindel 22 über Kupplungsmittel 33 gekuppelt werden. Der Spindelkopf kann zwei Arbeitsstellungen einnehmen. In der dargestellten Arbeitsstellung ist das Spindelende koaxial zur Antriebswelle 32 ausgerichtet. Die Antriebsleistung wird direkt an der Antriebswelle 32 auf die Arbeitsspindel übertragen. Der Wellenstummel 28 läuft, über ein zugeordnetes Kegelrad 26, mit dem auf der Arbeitsspindel angeordneten Kegelrad 24 verbunden, ständig mit. Bei einer um 90° in Richtung des Pfeiles geschwenkten Lage kann der Wellenstummel 28 mit der Antriebswelle 32 gekuppelt werden.

Der Spindelkopf 30 ist demnach in zwei Arbeitsstellungen einrichtbar, und zwar horizontal oder vertikal. Die Kupplung erfolgt durch axiale Verschiebung der Antriebswelle 32.

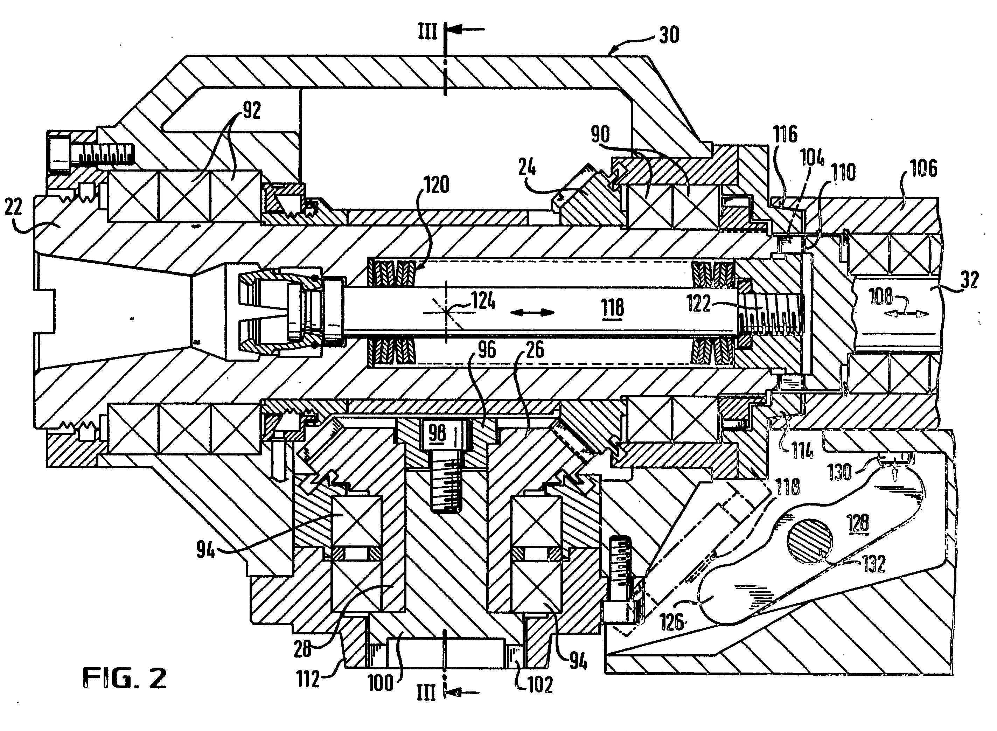

Fig. 2 zeigt eine Anordnung gemäß Fig. 1 in genauerer Darstellung. Im Gehäuse des Spindelkopfes 30 ist über Lager 90, 92 die Arbeitsspindel 22 drehbar gelagert. Auf der Arbeitsspindel 22 ist ein Kegelrad 24 aufgekeilt. Dieses greift in ein Kegelrad 26 ein, welches mit dem rechtwinklig zur Arbeitsspindel 22 angeordneten, ebenfalls über Lager 94 im Gehäuse des Spindelkopfes 30 gelagerten Wellenstummel 28 einstückig ausgebildet ist. Die Kupplungsmittel sind durch einen von der Kupplungsseite her in den Wellenstummel 28 eingesteckten und mit diesem verkeilten, durch eine Gegenbüchse 96 und Schraube 98 gehaltenen Kupplungseinsatz 100 gebildet, an welchem Kupplungsklauen 102 ausgebildet sind.

Das kupplungsseitige Ende der Arbeitsspindel 22 ist gleich ausgebildet wie der Einsatz 100 und ebenfalls mit Kupplungsklauen 104 versehen.

Die Antriebswelle 32 ist in einer Hülse 106 gelagert und mit dieser zusammen in Richtung des Pfeiles 108 axial verschiebbar in einem nicht näher dargestellten Spindelkopfträger angeordnet. Die Antriebswelle bildet an ihrem dem Spindelkopf zugewandten Ende das Gegenstück zu den Kupplungsmitteln des Kupplungseinsatzes 100 bzw. dem Ende der Arbeitsspindel 22 und greift mit Kupplungsklauen 110 in die Kupplungsklauen 102, 104, formschlüssig ein.

Am Gehäuse des Spindelkopfes 30 sind im Bereich dieser Kupplungen jeweils leicht kegelförmige Bünde 112 bzw. 114 ausgebildet bzw. angeordnet, welche mit einem an der Hülse 106 ausgebildeten, komplementär dazu geformten Zentrierkonus 116 zur exakten Lagefixierung des Spindelkopfes in seinen Arbeitsstellungen zusammenwirken. Dieser Zentrierkonus schiebt sich beim Einkuppeln der Antriebswelle 32 jeweils über die Bünde 114 (wie dargestellt) bzw. 112.

Innerhalb der Arbeitsspindel ist in an sich bekannter Weise ein Werkzeugspannsystem angeordnet mit einer Spannstange 118, welche in Spannrichtung durch ein Tellerfederpaket 120 belastet wird und durch Druck auf das Ende 122 der Spannstange 118 dem freien Ende 126 eines Kipphebels 128 gegenüberliegt. Dieser Kipphebel 128 kann über eine Stößelstange 130 durch einen nicht dargestellten Stellantrieb um die Achse 132 geschwenkt werden, wobei er das Ende 122 der Spannstange 118 in Löserichtung betätigt, so daß ein Werkzeugwechsel vorgenommen werden kann.

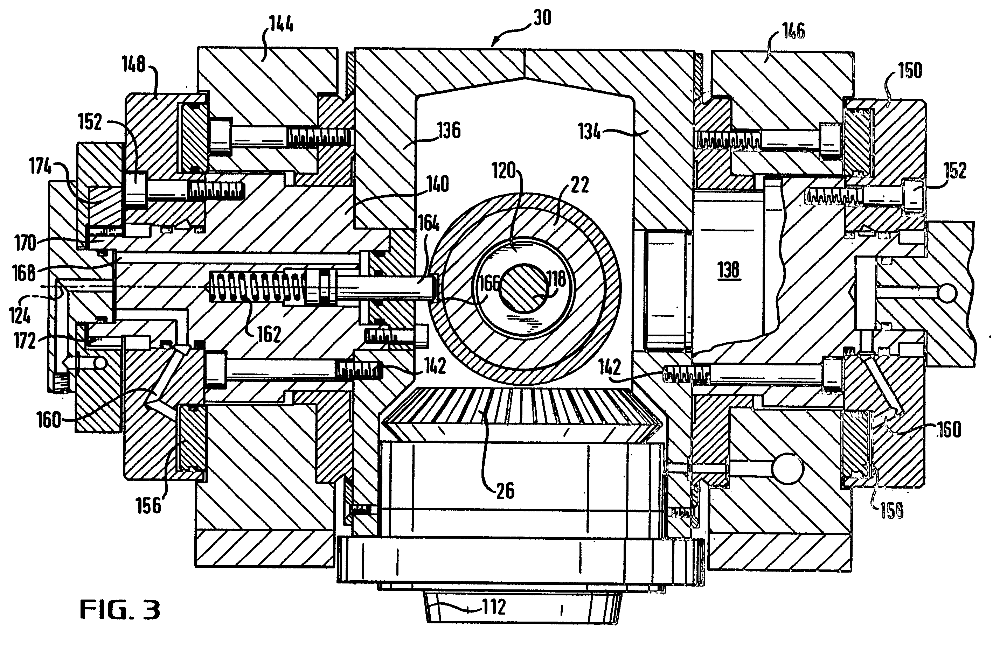

Fig. 3 zeigt in einer Schnittdarstellung gemäß der Linie III-III in Fig. 2 insbesondere die Lagerung und den Schwenkantrieb des Spindelkopfes 30. An den Seitenwänden 134, 136 des Spindelkopfes sind Drehzapfen 138, 140 durch Schrauben 142 befestigt, welche in den Seitenstücken 144, 146 des als Gabelkopf ausgebildeten Spindelkopfträgers gleitend gelagert sind. Auf jedem Drehzapfen 138 bzw. 140 ist außen ein Flansch 148 bzw. 150 durch Schrauben 152 aufgeschraubt, welche auch bei seitlichen Belastungen des Spindelkopfes eine Lastverteilung auf beide Seitenstücke 144, 146 gewährleisten. Zwischen den Flanschen 148 bzw. 150 und den zugehörigen Seitenstücken 144 bzw. 146 sind Klemmringe 156, 158 angeordnet, welche über Leitungen 160, durch Drucköl oder dergleichen beaufschlagt werden und den Spindelkopf in seinen Arbeitsstellungen bzw. der Werkzeugwechselstellung fixieren.

Im Drehzapfen 140 ist ein durch eine Feder 162 belasteter Fixierstift 164 verschiebbar gelagert, welcher in Fixierstellung in eine an der Arbeitsspindel 22 ausgebildete Fixierausnehmung 166 eingreift und die Arbeitsspindel in einer bestimmten Winkelstellung fixieren kann. Der Fixierstift 164 kann ebenfalls durch Drucköl über die Leitung 168 in Löserichtung verschoben werden.

An einer nach außen ragenden Verlängerung 170 des Drehzapfens 140 ist eine Verzahnung 172 ausgebildet, welche mit einer Zahnstange 174 zusammenwirkt, die ihrerseits Teil eines nicht dargestellten Stellantriebes ist. Bei Verschieben der Zahnstange 174 wird der Spindelkopf um die Achse 124 verschwenkt.

## Patentansprüche

1. Werkzeugmaschine, insbesondere Fräs- und Bohrmaschine, umfassend einen Spindelkopfträger und einen daran schwenkbar angeordneten, in mehrere Stellungen einstellbaren Spindelkopf (30) mit einer darin angeordneten Arbeitsspindel (22), wobei innerhalb der Arbeitsspindel (22) eine federbelastete Werkzeug-Spanneinrichtung (118, 120) angeordnet ist, die über einen über das rückwärtige Ende der Arbeitsspindel (22) hinausragenden Betätigungsstift lösbar ist, dadurch gekennzeichnet, daß der Spindelkopf (30) in eine Werkzeugwechselstellung einstellbar ist, bei welcher sich der Betätigungsstift im Bereich einer mit dem Betätigungsstift zusammenwirkenden Betätigungseinrichtung (128, 130) befindet, und daß die Betätigungseinrichtung (128, 130) einen mit einem Betätigungsantrieb verbundenen, auf das Ende des Betätigungsstiftes in Löserichtung wirkenden Betätigungshebel umfaßt.

2. Werkzeugmaschine nach Anspruch 1, dadurch gekennzeichnet, daß dem Spindelkopf (30) Klemmeinrichtungen (156, 158) zum Klemmen desselben in seinen jeweiligen Stellungen zugeordnet sind.

3. Werkzeugmaschine nach Anspruch 1 oder 2, dadurch gekennzeichnet, daß für die Verstellung des Spindelkopfes (30) in die jeweiligen Stellungen ein Servoantrieb (174) vorgesehen ist.

4. Werkzeugmaschine nach einem der Ansprüche 1 bis 3, dadurch gekennzeichnet, daß die Betätigungseinrichtung einen auf einer quer zum Betätigungsstift in Werkzeugwechselstellung liegenden Achse (132) verschwenkbar gelagerten Kipphebel (128) umfaßt, dessen eines Ende auf den Betätigungsstift wirkt und dessen anderes Ende durch die Stößelstange (130) eines Betätigungsantriebes beaufschlagbar ist.

## Claims

1. A machine tool, especially a milling and drilling machine tool, comprising a spindle nead carrier and a spindle nose (30) arranged swivellably thereon and adjustable in several positions and with a work spindle (22) arranged therein, a spring-loaded tool clamping device (118, 120) being arranged inside the work spindle (22) and being releasable by means of an operating pin projecting beyond the rear end of the work spindle (22), characterized in that the spindle head (30) is adjustable into a tool exchanging position, in which the operating pin is located in the area of an operating device (128, 130) interacting with the operating pin, and in that the operating device (128, 130) comprises an operating lever connected with an operating drive and acting in the release direction on the end of the operating pin.

2. A machine tool according to claim 1, characterized in that clamping devices (156, 158) are associated with the spindle head (30) for the clamping thereof in its respective positions.

3. A machine tool according to claim 1 or claim 2, characterized in that a servo-drive (174) is provided for the adjustment of the spindle head (30) into the respective positions.

4. A machine tool according to any one of claims 1 to 3, characterized in that the operating device comprises a tilting lever (128) arranged swivellably on an axis (132) lying transversely to the operating pin in the tool exchanging position, one end of which tilting lever (128) acts on the operating pin and the other end of which can be acted upon by the push-rod (130) of an operating drive.

**Revendications**

1. Machine-outil, notamment fraiseuse-perçeuse, comprenant un support de tête porte-broche et une tête porte-broche (30) qui est munie intérieurement d'une broche active (22) et qui est montée pour basculer sur le support de tête porte-broche pour prendre plusieurs positions, machine dans laquelle est prévu, à l'intérieur de la broche active (22), un dispositif de serrage d'un outil (118, 120) qui est chargé par un ressort et qui peut être relâché par l'intermédiaire d'un doigt d'actionnement qui émerge au-delà de l'extrémité arrière de la broche active (22), caractérisée en ce que la tête porte-broche (30) peut être placée dans une position de changement d'outil où le doigt d'actionnement se trouve dans la région d'un dispositif d'actionnement (128, 130) qui coopère avec le doigt d'actionnement, et en ce que le dispositif d'actionnement (128, 130) comprend un levier d'actionnement qui est relié à un entraînement d'actionnement et qui agit sur l'extrémité du doigt d'actionnement dans le sens du relâchement.

2. Machine-outil selon la revendication 1, caractérisée en ce qu'à la tête porte-broche (30) sont associés des dispositifs de blocage (156, 158) servant à la bloquer dans ses diverses positions.

3. Machine-outil selon la revendication 1 ou la revendication 2, caractérisée en ce que la mise en place de la tête porte-broche (30) dans ses diverses positions est assurée par une servocommande d'entraînement (174).

4. Machine-outil selon l'une des revendications 1 à 3, caractérisée en ce que le dispositif d'actionnement comprend un levier basculant (128) qui peut tourner autour d'un axe (132) qui est orienté transversalement au doigt d'actionnement dans la position de changement d'outil et dont une extrémité agit sur le doigt d'actionnement et dont l'autre extrémité peut être attaquée par un poussoir (130) d'un entraînement d'actionnement.

FIG. 1

FIG. 2

0 087 672

FIG. 3

0 087 672